# EUROPÄISCHE PATENTSCHRIFT

(11) **EP 1 419 684 B1**
(45) Veröffentlichungstag und Bekanntmachung des Hinweises auf die Patenterteilung: **07.06.2006**
(21) Anmeldenummer: 03025814.9
(22) Anmeldetag: 10.11.2003
(51) Int. Cl.: A01C 3/02

(54) **Kleinrührwerk**
Small agitator device
Petit dispositif d'agitation

(30) Priorität: 12.11.2002 DE 10252920
(43) Veröffentlichungstag der Anmeldung: 19.05.2004
(73) Patentinhaber: Brand, Heinrich, 49176 Hilter-Eppendorf (DE)
(72) Erfinder: Brand, Heinrich, 49176 Hilter-Eppendorf (DE)
(74) Vertreter: Brandt, Detlef

(56) Entgegenhaltungen:
- EP-A- 1 000 532
- DE-A- 19 643 729
- DE-U- 9 421 720
- FR-A- 1 477 613

## Beschreibung

Die Erfindung betrifft ein Kleinrührwerk nach dem Oberbegriff des Patentanspruches 1.

Derartige Kleinrührwerke werden vorzugsweise zum Zerkleinern und Verteilen fester Bestandteile, wie sie beispielsweise in Gülle und anderen Flüssigkeiten enthalten sind, verwendet. Das Einsatzgebiet umfaßt somit vorrangig Ställe für die Haltung von Tieren oder Kleinklärgruben für private Haushalte.

Bei den beschriebenen Einsatzfällen besteht häufig die Problematik, daß sich die in den Flüssigkeiten enthaltenen festen Bestandteile miteinander verbinden und in der Folge verklumpen, sodass der Abtransport innerhalb der hierfür vorgesehenen Abflussleitungen, die Abführung durch Abflussleitungen oder ein Abpumpen unmöglich wird. Dieses Problem stellt sich insbesondere bei kleinen oder flachen Gruben.

Aus G 93 00 514.8 ist ein transportables Kleinrührwerk bekannt, das neben einem Fahrgestell auf zwei Rädern auch ein Antriebsaggregat aufweist. Als Antriebsaggregat wurde hierbei ein Elektromotor verwendet. Das Antriebsaggregat weist ferner eine Rotorwelle auf, an der endseitig ein um eine Rotationsachse drehbarer Rührflügel befestigt ist. Die stillstehenden Rührflügel werden durch die Spaltenroste in einen Güllekanal geschoben, wo sie nach dem Einschalten des Gerätes das Zerkleinern der festen Bestandteile in der Gülle ermöglichen.

Nachteilig bei dieser Lösung ist jedoch, daß die Rührflügel nur in einer Richtung eingesetzt werden können. Es ist demnach nicht möglich, eine gerichtete Strömung zu erzeugen, die die Abführung der zerkleinerten Bestandteile zusammen mit der Flüssigkeit erleichtert.

Eine Problematik bekannter Kleinrührwerke besteht beispielsweise auch darin, dass die rotierenden, ungeschützten Rührflügel bei unsachgemäßer Anwendung mit den Wandungen des Güllekanals beziehungsweise der Güllewanne in Berührung kommen können. Dadurch sind Zerstörungen an den Bauteilen des Kleinrührwerkes möglich. Ferner liegen hierin auch Unfallgefahren für die Bedienperson.

Die DE 196 43 729 A1 betrifft eine Pumpe zum Fördern und Zerkleinern fester Bestandteile in Gülle und anderen Flüssigkeiten. Die Zerkleinerung der festen Bestandteile erfolgt hierbei mittels eines vor ein Rührwerk gesetzten Häckslers. Die Pumpe nach der DE 196 43 729 A1 weist ein Antriebsaggregat sowie eine Rotorwelle auf, die mit einem um eine Rotationsachse drehbaren, in einer Haube aufgenommenen Rührflügel verbunden ist. Die Haube verfügt über eine tangentiale Austrittsöffnung.

Aus der FR 1,477,613 ist darüber hinaus ein Kleinrührwerk zum Zerkleinern fester Bestandteile in Gülle und anderen Flüssigkeiten bekannt, dass ein Gestell, ein Antriebsaggregat sowie eine Rotorwelle aufweist, die endseitig mit wenigstens einem um eine Rotationsachse drehbaren Rührflügel verbunden ist, wobei der Rührflügel in einer Haube aufgenommen ist. Die FR 1,477,613 offenbart ferner eine Haube mit einer Einströmöffnung und einer Ausströmöffnung, die einander gegenüberliegend angeordnet sind. Damit wird jedoch eine erhebliche Sogwirkung erzeugt, sodass derartige Rührwerke nur mit geringer Antriebsleistung betrieben werden können.

Die gattungsbildende DE 94 21 720 U1 beschreibt ein Rührwerk zum Zerkleinern fester Bestandteile in Gülle und anderen Flüssigkeiten. Dieses Rührwerk verfügt über ein Antriebsaggregat sowie eine Rotorwelle, die mit einem um eine Rotationsachse drehbaren Rührflügel verbunden ist. Der Rührflügel ist in einer Haube aufgenommen, die zumindest zwei, quer zur Rotationsachse gerichtete Ausströmöffnungen aufweist.
Dieses Rührwerk ist jedoch infolge seiner Konstruktion nicht einfach zu transportieren.

Der Erfindung liegt die Aufgabe zugrunde, ein Kleinrührwerk zu schaffen, das ein Zerkleinern fester Bestandteile in Flüssigkeiten ohne Beschädigungen des Kleinrührwerkes ermöglicht und dabei eine gerichtete Strömung innerhalb der Flüssigkeit erzeugt, wobei die Strömungsrichtung vorzugsweise veränderbar sein sollte.

Diese Aufgabe wird mit einem kleinrührwerk gemäß den Merkmalen des Anspruches 1 gelöst.

Erfindungsgemäß wird deshalb vorgeschlagen, ein Kleinrührwerk zum Zerkleinern fester Bestandteile in Gülle und anderen Flüssigkeiten, das ein Gestell, eine Kupplung für ein Antriebsaggregat oder ein Antriebsaggregat sowie eine Rotorwelle aufweist, die endseitig mit wenigstens einem um eine Rotationsachse drehbaren Rührflügel verbunden ist, dahingehend zu verbessern, dass der Rührflügel in einer Haube aufgenommen ist, die zumindest zwei quer zur Rotationsachse gerichtete Ausströmöffnungen aufweist. Um einen größtmöglichen Schutz der beweglichen Bauteile und der mit dem transportablen Kleinrührwerk nach der vorgestellten Erfindung tätigen Personen zu gewährleisten, ist es ferner von Vorteil, wenn die Rotorwelle in einem Mantelrohr, welches beispielsweise einen zylindrischen oder polygonalen Querschnitt aufweisen kann, aufgenommen ist. Das Mantelrohr bietet einerseits den rotierenden Bauteilen Schutz und gewährleistet darüber hinaus die Möglichkeit, weitere Anbauten an dem Kleinrührwerk vorzusehen, die für einen komfortablen Betrieb erforderlich oder hilfreich sind.
Die Haube kann schwenkbar beziehungsweise drehbar an dem Mantelrohr befestigt sein. Sowohl eine schwenkbare Ausführung, die selbstverständlich auch eine entsprechende gelenkige Verbindung des Rührflügels mit der Rotorwelle voraussetzt, wie sie beispielsweise mittels einfacher Kreuzgelenke realisierbar ist, als auch die drehbare Anordnung der Haube an dem Mantelrohr gestatten, die Strömungsrichtung der zerkleinerten, mit Flüssigkeit vermengten Bestandteile der Gülle zu beeinflussen und zu verändern. Für die Veränderung der Strömungsrichtung muss folglich nicht das gesamte transportable Kleinrührwerk in seiner Position verändert werden.

Durch diese Ausführung eines erfindungsgemäßen Kleinrührwerkes können Beschädigungen des Rührflügels oder der Rührflügel innerhalb des Güllekanals oder der Güllewanne sicher vermieden werden, denn ein Berührungskontakt der Rührflügel mit den entsprechenden Wandungen ist durch die schützende Haube ausgeschlossen.

Darüber hinaus wird durch die Haube mit den darin enthaltenen Ausströmöffnungen eine gerichtete Strömung der zerkleinerten sowie der flüssigen Bestandteile der Gülle ermöglicht. Mit einer derartigen Ausführung kann folg-lich sowohl eine erhebliche Wirkungsgradverbesserung durch optimale Zerkleinerung und Verteilung bei gleichzeitiger Erhöhung der Sicherheit eines Kleinrührwerkes erreicht werden. Das erfindungsgemäße Kleinrührwerk ist zudem einfach aufgebaut und daher kostengünstig herstellbar.

Das Kleinrührwerk kann mit einem Antriebsaggregat ausgestattet sein, das unmittelbar an dem Gestell angebracht ist oder lediglich eine Kupplung für ein derartiges Antriebsaggregat aufweisen. Bei dem letzteren Ausführungsbeispiel wäre es beispielsweise möglich, einen Fremdantrieb zum Betrieb des Kleinrührwerkes einzusetzen, also zum Beispiel eine Kopplung mit einer Antriebswelle eines landwirtschaftlichen Fahrzeuges oder eines transportablen Elektromotors vorzusehen.

Das Gestell kann darüber hinaus gemäß einer vorteilhaften Weiterbildung als Fahrgestell mit wenigstens zwei Rädern ausgebildet sein, sodass das Kleinrührwerk leichter transportiert werden kann. Somit wird ein transportables Kleinrührwerk zur Verfügung gestellt.

Entsprechend einer Ausgestaltung der Erfindung können die Ausströmöffnungen unmittelbar in die Haube eingebracht oder in je einem Strömungskanal der Haube ausgebildet sein. Die Anordnung der Ausströmöffnungen richtet sich folglich nach der erwünschten Strömungsrichtung.

Um die Strömungsverhältnisse des erfindungsgemäßen transportablen Kleinrührwerkes zu optimieren, ist es ferner von Vorteil, wenn die Haube zumindest abschnittsweise kreisförmig ausgeführt ist. Demnach sollte sie zumindest einen im Querschnitt kreisförmigen Abschnitt ihrer Mantelfläche aufweisen. Die Ausströmungsrichtung wenigstens einer der Ausströmöffnungen beziehungsweise der Strömungskanäle der Haube kann folglich, bezogen auf diesen kreisförmigen Abschnitt, radial oder tangential verlaufen.

Von besonderem Vorteil ist es darüber hinaus, wenn die Ausströmöffnungen beziehungsweise Strömungskanäle über den Umfang der Haube verteilt in gleichmäßigen Abständen zueinander angeordnet sind. So ist es entsprechend einer einfachen Ausführungsvariante der Haube des erfindungsgemäßen transportablen Kleinrührwerkes möglich, zwei einander gegenüberliegend angeordnete Strömungskanäle mit den darin vorhandenen Ausströmöffnungen vorzusehen. Die einander gegenüberliegende Anordnung ist deshalb sinnvoll, weil dadurch der austretende Flüssigkeitsstrom des ersten Strömungskanals beziehungsweise der ersten Ausströmöffnung einen Rückstoß erzeugt, der der gegenüberliegenden, zweiten Ausströmöffnung beziehungsweise dem zweiten Strömungskanal entgegengerichtet ist. Somit heben sich die Rückstoßkräfte gegenseitig auf, sodass das transportable Kleinrührwerk ohne selbsttätige Bewegungen nahezu stillstehend auf den Lattenrosten des Güllekanals oder der Güllewanne verbleibt.

Neben den beschriebenen zwei einander gegenüberliegend angeordneten Ausströmöffnungen beziehungsweise Strömungskanälen kann jedoch ebenso jede symmetrische Anordnung dieser Ausströmöffnungen beziehungsweise Strömungskanäle vorgesehen werden. So können beispielsweise drei um jeweils 120° zueinander versetzte Ausströmöffnungen oder Strömungskanäle ebenso vorgesehen sein wie weitere Verteilungen.

Um die Schwenkbarkeit beziehungsweise Verdrehmöglichkeit der Haube an dem Mantelrohr umzusetzen, wird entsprechend einer Weiterbildung der Erfindung vorgeschlagen, die Haube mit einer Verstelleinrichtung auszustatten.

Diese kann zum Beispiel aus einer an der Haube befestigten Hebelmechanik mit einer Rastiervorrichtung zur veränderbaren Festlegung der Haube am Mantelrohr bestehen. Die Rastiervorrichtung dient dazu, verschiedene Positionen der Haube einzustellen und festzulegen. Sie kann aus einer einfachen Feder-Kugel-Raste oder einer ähnlichen Einrichtung bestehen.

Zur Vereinfachung des Transports eines erfindungsgemäßen transportablen Kleinrührwerkes ist es sinnvoll, wenn das Antriebsaggregat mit der den Rührflügel tragenden Rotorwelle höhenverstellbar ausgeführt wird. Derartige Höhenverstellungen sind an sich bekannt und können beispielsweise aus einer Hubvorrichtung bestehen. Diese Hubvorrichtung ist als Seilwinde oder als eine durch die Kraft einer Feder, durch eine Hydraulik oder durch eine Pneumatik unterstützte Hubmechanik ausführbar.

Insgesamt kann durch die Hubvorrichtung das transportable Kleinrührwerk für Transport- oder Unterbringungszwecke auf ein Mindestmaß reduziert werden.

Auf den Öffnungen der Gitterroste oberhalb der Güllekanäle beziehungsweise der Güllewanne aufgestellt ist es möglich, das Antriebsaggregat zusammen mit der Rotorwelle und den daran befestigten Rührflügeln abzusenken und somit die Rührflügel in das zu verquirlende Medium zu verbringen, wo die Zerkleinerung der darin befindlichen, festen Bestandteile erfolgen soll.

Mit dem erfindungsgemäßen transportablen Kleinrührwerk steht insgesamt eine sehr einfache und kostengünstige Ausführung zur Verfügung, die einen bestmöglichen Schutz der damit tätigen Personen sowie der Bauteile des Kleinrührwerkes bei gleichzeitiger Strömungsoptimierung des verflüssigten Mediums ermöglicht.

Eine spezielle Ausführungsform eines erfindungsgemäßen transportablen Kleinrührwerkes wird nachfolgend unter Bezugnahme auf die zugehörigen Zeichnungen näher erläutert.

Es zeigen:
- Figur 1:: ein transportables Kleinrührwerk in einer Seitenansicht in nicht betriebsbereitem Zustand,
- Figur 2:: ein transportables Kleinrührwerk in einer Seitenansicht mit in die Güllewanne abgesenktem Rührflügel,
- Figur 3:: einen Blick in die Haube eines erfindungsgemäßen transportablen Kleinrührwerkes von der Rührflügelseite her,
- Figur 4:: ausschnittsweise und im Schnitt den haubenseitigen Teil eines transportablen Kleinrührwerkes und
- Figur 5:: ausschnittsweise und im Schnitt eine Verstelleinrichtung zur Verdrehung der Haube um die Rotationsachse.

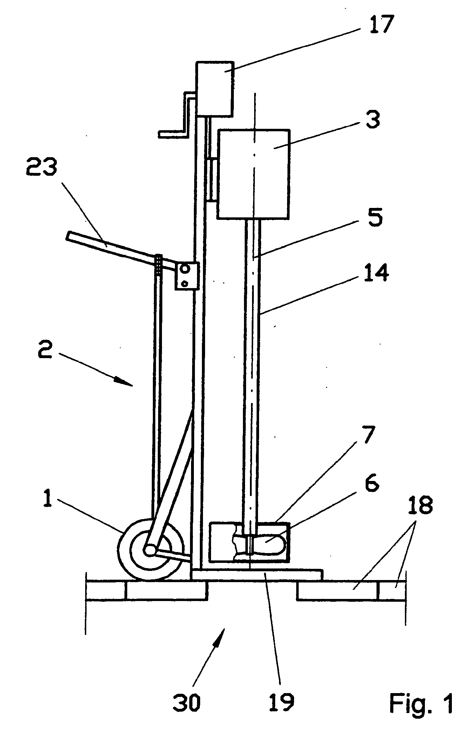

Die Figur 1 zeigt beispielhaft eine mögliche Ausführung eines transportablen Kleinrührwerkes nach der Erfindung in einer nicht betriebsbereiten Stellung, in der das Fahrgestell 2 derart oberhalb einer Öffnung 30 zwischen mehreren Lattenrosten 18 eines Nutztierstalles aufgestellt ist, dass die Stützholme 19 des Fahrgestells 2 die Öffnung 30 überragen und somit für die erforderliche Standfestigkeit des transportablen Kleinrührwerkes sorgen und dieses insgesamt abstützen.

Zur Fortbewegung des transportablen Kleinrührwerkes dienen Räder 1, die an dem Fahrgestell 2 befestigt sind. Um den Transport durch eine Bedienperson zu ermöglichen, ist an dem Fahrgestell 2 ferner ein Handgriff 23 angebracht. Dieser kann in an sich bekannter Weise höhenverstellbar an verschiedene Körpergrößen der Bedienperson anpassbar ausgeführt sein.

Auf der dem Handgriff 23 gegenüberliegenden Seite des Fahrgestells 2 weist das in Figur 1 gezeigte transportable Kleinrührwerk ein Antriebsaggregat 3 auf, welches vorliegend ein Elektromotor ist. Dieses Antriebsaggregat 3 kann mittels einer Hubvorrichtung 17, die bei dem gezeigten Ausführungsbeispiel eine Seilwinde ist, in vertikaler Richtung auf- und abbewegt werden. Die Rotorwelle 4 des Antriebsaggregates 3 ist in einem Mantelrohr 14 aufgenommen und um die Rotationsachse 5 drehbar. Sie trägt an ihrem unteren, dem Antriebsaggregat 3 abgewandten Ende zwei Rührflügel 6. Diese Rührflügel sind in einer schützenden Haube 7 aufgenommen.

Aus der Figur 1 nicht entnehmbar ist die Anordnung der Stützholme 19 am Fahrgestell 2. Diese sind entweder zueinander parallel verlaufend angeordnet, sodass zwischen ihnen ein Spalt vorhanden ist, durch den das Hindurchführen der Rührflügel 6 mit der Haube 7 möglich ist. Anderenfalls können die Stützholme 19 beispielsweise in V-förmiger Ausführung am Fahrgestell 2 befestigt werden. Es muß jedoch in jedem Fall gewährleistet sein, dass die Rührflügel 6 mit der Haube 7 zwischen den Stützholmen hindurch bewegt werden können, um sie in den Güllekanal beziehungsweise in die Güllewanne absenken zu können.

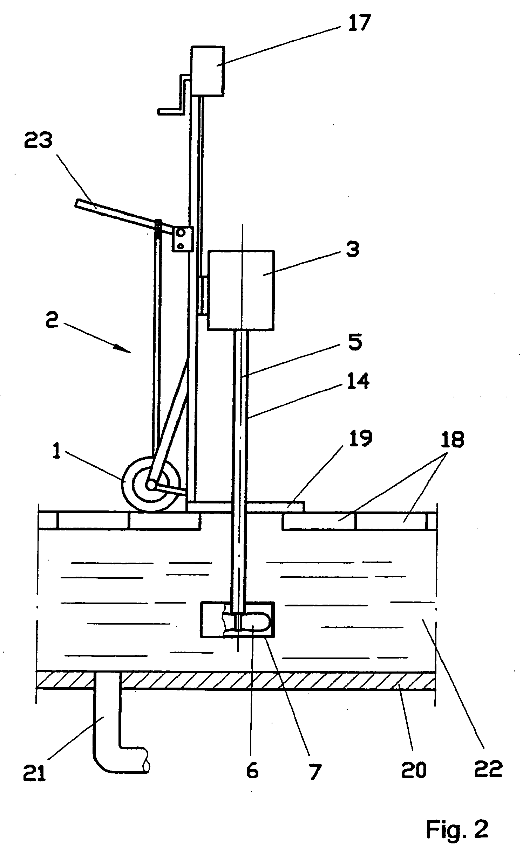

In der Figur 2 ist ein erfindungsgemäßes transportables Kleinrührwerk in einer betriebsbereiten Stellung dargestellt. Dabei sind die bereits in Figur 1 erläuterten Bauteile baugleich und mit den selben Bezugsziffern bezeichnet worden. Im Unterschied zu der Darstellung in Figur 1 zeigt die Figur 2 jedoch ein mittels der Hubvorrichtung 17 abgesenktes Antriebsaggregat 3, dessen Mantelrohr 14 zum Teil durch die Öffnung 30 in eine Güllewanne 20 abgesenkt wurde, in der sich die zu zerkleinernde Gülle 22 befindet. Am unteren Ende des Mantelrohres 14 ist eine Haube 7 mit den darin geschützt aufgenommenen Rohrflügeln 6 angebracht. Um die zerkleinerte Gülle 22 aus der Güllewanne 20 abführen zu können, weist die Güllewanne 20 einen Abfluss 21 auf. Zu bemerken ist noch, dass in den Darstellungen in den Figuren 1 und 2 die Rührflügel 6 und die Haube 7 in schematisch vereinfachter Darstellung gezeigt wurden.

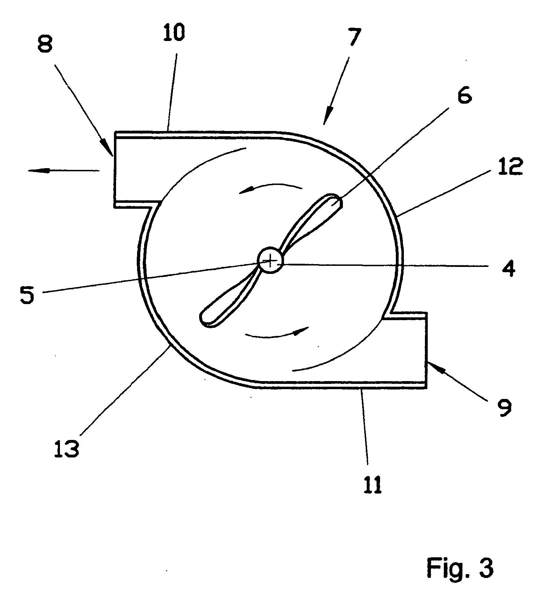

Die Figur 3 zeigt einen Blick von der Unterseite des erfindungsgemäßen transportablen Kleinrührwerkes in die Haube 7. Zu erkennen sind die Rührflügel 6, die propellerartig ausgeführt und an der Rotorwelle 4 befestigt sind. Durch das in Figur 3 nicht dargestellte Antriebsaggregat 3 wird die Rotorwelle 4 in eine Drehbewegung versetzt, sodass die Rührflügel 6 um die Rotationsachse 5 rotieren. Durch die Bewegung der Rührflügel 6 mit hoher Drehzahl wird die Gülle zerkleinert, mit Flüssigkeit vermengt und kann somit über die Strömungskanäle 10 beziehungsweise 11 und die darin enthaltenen Ausströmöffnungen 8 beziehungsweise 9 abströmen. Die Strömungskanäle 10 und 11 sind einander gegenüberliegend in der Haube 7 angeordnet. Somit wird der durch die Strömung entstehende Rückstoß aufgehoben, sodass das Kleinrührwerk keine unerwünschten Eigenbewegungen ausführt. Die Strömungskanäle 10 und 11 sind bei der hier gezeigten Ausführung so gestaltet, dass sie ausgehend von einem im Querschnitt kreisförmigen Teil 12 beziehungsweise 13 der Haube 7 in annähernd tangentialer Richtung auslaufen. Diese Betrachtungsweise bezieht sich auf die äußere Mantelfläche der Strömungskanäle 10 beziehungsweise 11.

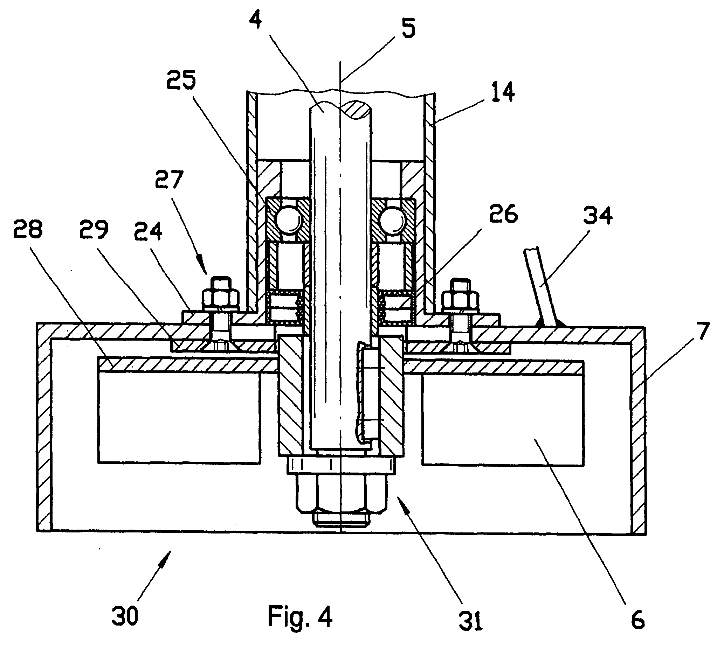

In der Figur 4 ist ausschnittsweise und im Schnitt der untere Teil eines erfindungsgemäßen transportablen Kleinrührwerkes gezeigt, sodass eine mögliche Bauvariante der Befestigung der Haube 7 an dem. Mantelrohr 14 erkennbar wird. Im unteren Endabschnitt des Mantelrohres 14 ist ein im Querschnitt L-förmiger Lagerflansch 24 eingesetzt und an dem Endabschnitt des Mantelrohres 14 befestigt. Der Lagerflansch 24 nimmt einerseits ein Wälzlager 25 und darüber hinaus mindestens eine Dichtung, im vorliegenden Fall zwei Simmerringdichtungen, auf. In dem Wälzlager ist die Rotorwelle 4 drehbeweglich gelagert. Diese rotiert durch den Antrieb des Antriebsaggregates 3 um die gedachte und als Mittellinie kenntlich gemachte Rotationsachse 5. Im unteren Abschnitt der Rotorwelle 4 befindet sich eine Flügelarretierung 31, die mittels einer Verschraubung sowie einer Feder-Nut-Verbindung einen Träger 28 festsetzt, der die Rührflügel 6 trägt. Im dargestellten Ausführungsbeispiel sind an dem Träger 28 zwei einander diametral gegenüberliegenden Rührflügel 6 vorhanden. Zwischen dem Lagerflansch 24 und einem Klemmflansch 29, die durch eine Schraubverbindung 27 miteinander verbunden sind, ist die Haube 7 klemmend gehalten. Diese klemmende Halterung wird deshalb zum Einsatz gebracht, um mittels einer hier nur angedeuteten Verstelleinrichtung 15, die nachfolgend noch näher beschrieben wird, die Haube um die Rotationsachse 5 drehen zu können. Diese abschnittsweise Drehbarkeit der Haube 7 ist von Vorteil, weil dadurch eine gerichtete Strömung der zerkleinerten Bestandteile der Gülle in dem Güllekanal beziehungsweise der Güllewanne ermöglicht wird.

Im rechten Bildteil der Figur 4 ist an der Haube 7 eine Verbindungsstange 34 angebracht, die ein Bestandteil dieser Verstelleinrichtung 15 ist.

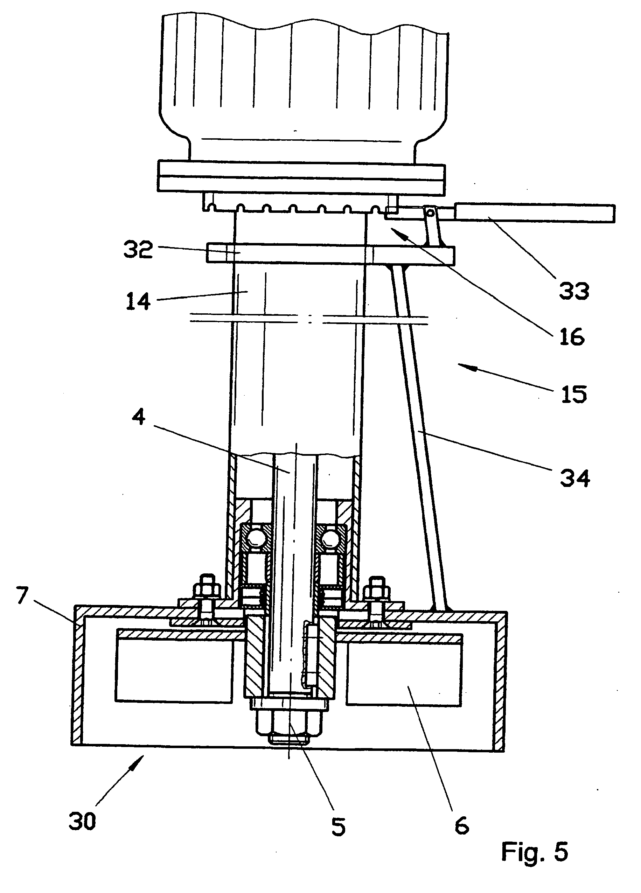

Die Figur 5 zeigt darüber hinaus ausschnittsweise und teilweise im Schnitt ein erfindungsgemäßes transportables Kleinrührwerk, wobei eine Verstelleinrichtung 15 vereinfacht dargestellt ist. Diese insgesamt mit 15 bezeichnete Verstelleinrichtung besteht aus einer Schelle 32, die an dem Mantelrohr 14 festgelegt ist. An dieser Schelle 32 ist ein in vertikaler Richtung schwenkbarer Hebel 33 angeordnet. Der Hebel 33 ist Bestandteil einer Rastiervorrichtung 16. Eine Verbindungsstange 34 bildet die Verbindung zur Haube 7, an der sie festgelegt ist. Die Verstelleinrichtung 15 kann mittels einer vertikalen Bewegung des Hebels 33 gelöst werden, so dass die Rastiervorrichtung 16 aus ihrer eingerasteten Stellung herausgelöst wird. Sodann ist ein Verdrehen der Haube 7 um die Rotationsachse 5 möglich. An der gewünschten Stelle kann der Hebel 33 in zur Löserichtung entgegensetzter Richtung verbracht werden und arretiert damit die Rastiervorrichtung 16 in einer neuen, verglichen zur vorherigen Position, verdrehten Stellung. Die Schraubverbindung 27 zwischen dem Lagerflansch 24 und dem Klemmflansch 29 ist so ausgeführt, dass eine Bewegbarkeit der Haube um die Rotationsachse 5 möglich bleibt und die Haube dennoch festgehalten wird, um ihre Schutzfunktion der Rotorflügel 6 zu gewährleisten.

### Bezugszeichenliste:

- 1: Rad
- 2: Fahrgestell
- 3: Antriebsaggregat
- 4: Rotorwelle
- 5: Rotationsachse
- 6: Rührflügel
- 7: Haube
- 8: Ausströmöffnung
- 9: Ausströmöffnung
- 10: Strömungskanal
- 11: Strömungskanal
- 12: kreisförmiger Abschnitt
- 13: kreisförmiger Abschnitt
- 14: Mantelrohr
- 15: Verstelleinrichtung
- 16: Rastiervorrichtung
- 17: Hubvorrichtung
- 18: Lattenrost
- 19: Stützholm
- 20: Güllewanne
- 21: Abfluss
- 22: Gülle
- 23: Handgriff
- 24: Lagerflansch
- 25: Wälzlager
- 26: Dichtung
- 27: Schraubverbindung
- 28: Träger
- 29: Klemmflansch
- 30: Öffnung
- 31: Flügelarrettierung
- 32: Schelle
- 33: Hebel
- 34: Verbindungsstange

## Patentansprüche

1. Kleinrührwerk zum Zerkleinern fester Bestandteile in Gülle und anderen Flüssigkeiten, aufweisend eine Kupplung für ein Antriebsaggregat oder ein Antriebsaggregat (3) sowie eine Rotorwelle (4), die endseitig mit wenigstens einem um eine Rotationsachse (5) drehbaren, in einer Haube (7) aufgenommenen Rührflügel (6) verbunden ist, wobei die Haube (7) zumindest zwei, quer zur Rotationsachse (5) gerichtete Ausströmöffnungen (8,9) aufweist,
**dadurch gekennzeichnet, dass**
die Rotorwelle (4) des über ein Gestell (2) verfügenden Kleinrührwerkes in einem Mantelrohr (14) aufgenommen und die Haube (7) schwenkbar beziehungsweise drehbar an dem Mantelrohr (14) befestigt ist.

2. Kleinrührwerk nach Anspruch 1,
**dadurch gekennzeichnet, dass**
das Gestell (2) als Fahrgestell mit wenigstens zwei Rädern (1) ausgebildet ist.

3. Kleinrührwerk nach Anspruch 1 oder 2,
**dadurch gekennzeichnet, dass**
die Ausströmöffnungen (8, 9) in je einem Strömungskanal (10, 11) der Haube (7) ausgebildet sind.

4. Kleinrührwerk nach einem der vorstehend genannten Ansprüche,
**dadurch gekennzeichnet, dass**
die Haube (7) zumindest einen im Querschnitt kreisförmigen Abschnitt (12, 13) in ihrer Mantelfläche aufweist und die Ausströmrichtung wenigstens einer der Ausströmöffnungen (8, 9) oder der Strömungskanäle (10, 11) der Haube (7) radial oder tangential zu diesem kreisförmigen Abschnitt (12, 13) ist.

5. Kleinrührwerk nach einem der vorstehend genannten Ansprüche,
**dadurch gekennzeichnet, dass**
die Haube (7) mehrere gleichmäßig über den Umfang der Haube (7) verteilte Ausströmöffnungen (8, 9) beziehungsweise Strömungskanäle (10, 11) aufweist.

6. Kleinrührwerk nach Anspruch 1,
**dadurch gekennzeichnet, dass**
die Haube (7) mit einer Verstelleinrichtung (15) verbunden ist.

7. Kleinrührwerk nach Anspruch 6,
**dadurch gekennzeichnet, dass**
die Verstelleinrichtung (15) aus einer an der Haube (7) befestigten Hebelmechanik mit eienr Rastiervorrichtung (16) zur veränderbaren Festlegung der Haube (7) am Mantelrohr (14) besteht.

8. Kleinrührwerk nach einem der vorhergehenden Ansprüche,
**dadurch gekennzeichnet, dass**
das transportable Kleinrührwerk eine das Antriebsaggregat (3) mit der den Rührflügel (6) tragenden Rotorwelle (4) höhenverstellbare Hubvorrichtung (17) aufweist.

9. Kleinrührwerk nach Anspruch 8,
**dadurch gekennzeichnet, dass**
die Hubvorrichtung (17) eine Seilwinde oder eine durch die Kraft einer Feder, durch eine Hydraulik oder durch eine Pneumatik unterstützte Hubmechanik ist.

## Claims

1. Small agitator for chopping solid elements in slurry and other liquids, having a coupling for a drive unit or a drive unit (3), as well as a rotor shaft (4), the end of which is connected to at least one agitator blade (6) accommodated in a hood (7) and rotatable about a rotation axis (5), which hood (7) has at least two outlet orifices (8, 9) directed transversely with respect to the rotation axis (5),
**characterised in that**
the rotor shaft (4) of the small agitator, which has a frame (2), is accommodated in a casing tube (14) and the hood (7) is secured to the casing tube (14) so as to be pivotable respectively rotatable.

2. Small agitator as claimed in claim 1,
**characterised in that**
the frame (2) is provided in the form of a chassis with at least two wheels (1).

3. Small agitator as claimed in claim 1 or 2,
**characterised in that**
the outlet orifices (8, 9) are provided each in a respective flow passage (10, 11) of the hood (7).

4. Small agitator as claimed in one of the preceding claims,
**characterised in that**
the hood (7) has at least one portion (12, 13) with a circular cross-section in its casing surface and the outlet direction of at least one of the outlet orifices (8, 9) or the flow passages (10, 11) of the hood (7) is radial or tangential with respect to this circular portion (12, 13).

5. Small agitator as claimed in one of the preceding claims,
**characterised in that**
the hood (7) has several outlet orifices (8, 9), respectively flow passages (10, 11) distributed uniformly around the periphery of the hood (7).

6. Small agitator as claimed in claim 1,
**characterised in that**
the hood (7) is connected to an adjusting mechanism (15) .

7. Small agitator as claimed in claim 6,
**characterised in that**
the adjusting mechanism (15) comprises a lever mechanism secured to the hood (7) with a latching device (16) for variably affixing the hood (7) to the casing tube (14).

8. Small agitator as claimed in one of the preceding claims,
**characterised in that**
the transportable small agitator has a height-adjustable lifting device (17) for the drive unit (3) with the rotor shaft (4) supporting the agitator blades (6).

9. Small agitator as claimed in claim 8,
**characterised in that**
the lifting device (17) is a cable winch or a lifting mechanism assisted by the force of a spring, a hydraulic system or a pneumatic system.

## Revendications

1. Petit agitateur pour broyer des composants solides de lisier et d'autres liquides, présentant un dispositif d'accouplement pour un mécanisme d'entraînement ou un mécanisme d'entraînement (3) ainsi qu'un arbre de rotor (4), qui est raccordé, à son extrémité, à au moins une palette d'agitation (6) reçue dans une enceinte (7) et pouvant tourner autour d'un axe de rotation (5), l'enceinte (7) ayant au moins deux ouvertures d'évacuation (8, 9) dirigées transversalement à l'axe de rotation (5), **caractérisé en ce que** l'arbre de rotor (4) du petit agitateur disposant d'un châssis (2) est reçu dans un tube enveloppe (14) et l'enceinte (7) étant fixée à pivotement ou à rotation au tube enveloppe (14).

2. Petit agitateur selon la revendication 1, **caractérisé en ce que** le châssis (2) se présente sous la forme d'un châssis de véhicule avec au moins deux roues (1).

3. Petit agitateur selon la revendication 1 ou 2, **caractérisé en ce que** les ouvertures d'évacuation (8, 9) sont formées respectivement dans un canal d'écoulement (10, 11) de l'enceinte (7) .

4. Petit agitateur selon l'une quelconque des revendications précédentes, **caractérisé en ce que** l'enceinte (7) présente au moins une section circulaire en coupe transversale (12, 13) dans sa surface enveloppe et **en ce que** la direction d'évacuation d'au moins une des ouvertures d'évacuation (8, 9) ou des canaux d'écoulement (10, 11) de l'enceinte (7) est radiale ou tangentielle à cette section circulaire (12, 13).

5. Petit agitateur selon l'une quelconque des revendications précédentes, **caractérisé en ce que** l'enceinte (7) présente plusieurs ouvertures d'évacuation (8, 9) réparties uniformément sur la périphérie de l'enceinte (7) ou des canaux d'écoulement (10,11).

6. Petit agitateur selon la revendication 1, **caractérisé en ce que** l'enceinte (7) est raccordée à un dispositif de réglage (15).

7. Petit agitateur selon la revendication 6, **caractérisé en ce que** le dispositif de réglage (15) est constitué d'un mécanisme à levier fixé sur l'enceinte (7) avec un dispositif cranté (16) pour fixer de manière modifiable l'enceinte (7) sur le tube enveloppe (14).

8. Petit agitateur selon l'une quelconque des revendications précédentes, **caractérisé en ce que** le petit agitateur transportable présente un dispositif élévateur (17) pouvant régler la hauteur du mécanisme d'entraînement (3) avec l'arbre de rotor (4) portant la palette d'agitation (6).

9. Petit agitateur selon la revendication 8, **caractérisé en ce que** le dispositif élévateur (17) est un treuil à câble ou un mécanisme élévateur soutenu par la force d'un ressort, par un système hydraulique ou par un système pneumatique.
